# EUROPEAN PATENT SPECIFICATION

(11) **EP 3 806 219 B1**
(45) Date of publication and mention of the grant of the patent: **28.02.2024**
(21) Application number: 20197382.3
(22) Date of filing: 22.09.2020
(51) Int. Cl.: H01M 10/054, H01M 4/131, H01M 4/134, H01M 4/1391, H01M 4/42, H01M 4/48

(54) **CATHODE MATERIAL FOR SECONDARY MANGANESE DIOXIDE AQUEOUS BATTERIES**
KATHODENMATERIAL FÜR WÄSSRIGE MANGANDIOXIDSEKUNDÄRBATTERIEN
MATÉRIAU DE CATHODE POUR BATTERIES SECONDAIRES AQUEUSES AU DIOXYDE DE MANGANÈSE

(30) Priority: 07.10.2019 SE 1930318
(43) Date of publication of application: 14.04.2021
(73) Proprietor: Enerpoly AB, 114 28 Stockholm (SE)
(72) Inventor: CHAMOUN, Mylad, 112 59 Stockholm (SE); SKÅRMAN, Björn, 263 33 Höganäs (SE); VIDARSSON, Hilmar, 263 91 Höganäs (SE)
(74) Representative: Zacco Sweden AB

(56) References cited:
- WO-A1-2017/062435
- WO-A2-2019/023546
- US-A1- 2012 034 515
- US-A1- 2015 287 988

## Description

### TECHNICAL FIELD

The present document relates to a cathode material for a secondary aqueous manganese dioxide battery, a secondary aqueous manganese dioxide battery comprising such a cathode material and to a method for production of such a cathode material.

### BACKGROUND ART

There are rising concerns regarding the dependency of lithium-ion batteries on limited source-material availability, expensive materials for high energy density batteries and unreliable safety. This has revived interest in batteries employing water-based electrolytes and materials of abundant resources.

The traditional alkaline zinc-manganese dioxide battery has a high energy density comparable to lithium-ion batteries, delivers a lower price per kilowatt-hour and is safe. The cyclability of the battery is limited because of structural instabilities on the zinc electrode and irreversible phases formed during cycling at the manganese dioxide electrode. In the manganese dioxide electrode, the irreversibility arises from the spinel phases, Mn₃O₄ and ZnMn₂O₄, which are electrochemically inactive. Overcoming these inactive phases is possible with an aqueous zinc sulfate-based electrolyte, where pH is near mild acidic or neutral and results in changed redox chemistry, which is described in for example US 8,663,844 B2.

In an aqueous zinc sulfate-based electrolyte, zinc sulfate hydroxide pentahydrate, Zn₄(OH)₆(SO₄)·5H₂O, precipitates during discharge upon proton insertion into manganese dioxide. This precipitate acts as a pH buffer and consumes generated hydroxide ions from inserted protons and concurrently blocks active sites of the electrode. This may plug pores and eventually hinder diffusion of ions to the surface and increase the resistance of the battery. Thus, it is necessary to limit and facilitate the precipitate from insulating the active surface area.

The positive electrode of secondary aqueous sulfate zinc-manganese dioxide batteries commonly consists of amorphous tunneled- or layered-manganese dioxide polymorphs such as alpha-, beta-, delta-, gamma-manganese dioxide or ramsdellite, and mixtures thereof, as well as conductive additives and binders. The electrochemically inactive zinc sulfate hydroxide precipitate that forms during discharge requires high affinity to avoid blockage of active particles. None of these components facilitate the precipitate sufficiently. Thus, arising precipitate on the manganese dioxide electrode formed during cycling of secondary batteries shortens their service life and limits the applicable specific energy and energy density required for applied solutions.

### SUMMARY OF THE INVENTION

It is an object of the present disclosure to provide a cathode material for a secondary aqueous manganese dioxide battery, a secondary aqueous manganese dioxide battery comprising such a cathode material and a method for production of such a cathode material, wherein when the cathode material is used in a secondary aqueous manganese dioxide battery there is an improved electrical conductivity and reduced formation of precipitates during discharge compared to known solutions.

The invention is defined by the appended independent patent claims. Non-limiting embodiments emerge from the dependent patent claims, the appended drawings and the following description.

According to a first aspect there is provided a cathode material for a secondary aqueous manganese dioxide battery, according to claim 1.

The manganese particles may have a morphology including wires, fibers, cubes, platelets, spheres and uneven morphology. The particles may have an average diameter of 5 nm-50 µm, preferably 1-10 µm.

Non-modified manganese dioxide particles have a single-phase gamma structure consisting of base building MnOe octahedra forming to intergrown manganese dioxide polymorphs; ramsdellite and pyrolusite (beta-manganese dioxide).

20-100% of an average bulk composition of the modified manganese dioxide particles has a beta manganese dioxide structure, the rest being other manganese dioxide polymorph structures, Mn₃O₄ or combinations thereof (as measured with powder X-ray diffraction). Such other manganese dioxide polymorph structures may for example be alfa, beta, delta, gamma, lambda and ramsdellite. In some embodiments 30-100%, 40-100%, 50-100%, 60-100%, 70-100%, 80-100% or 90-100% of an average bulk composition of the manganese dioxide particles has a beta manganese dioxide structure. The closer to 100% of the beta manganese dioxide structure, i.e. a single-phase beta manganese dioxide structure, the better the performance of the cathode material when used in a secondary aqueous manganese dioxide battery.

Powder X-ray diffraction (XRD) techniques are well known in the art and are primarily used for phase identification of a crystalline material. The analysed material is finely ground, homogenized, and average bulk composition is determined. The positions and the relative intensity of the lines in a diffraction pattern are indicative of a particular phase and material. A multi-phase mixture shows more than one pattern superposed, allowing for determination of the relative concentrations of phases in the mixture.

The carbon content of non-modified manganese dioxide particles is about 0.02 wt%. The modified manganese dioxide particles have a lower carbon content of 0.005-0.01 wt%.

The carbon content is the total carbon content of the manganese dioxide particles, i.e. in the bulk and the surface. The carbon content may be measured using a LECO analysis, which is a method for determining the concentration of elements within a metallic sample, including carbon. Infrared absorption and thermal conductivity are used to measure combustion gases within a metallic sample. This process determines the presence and concentration of e.g. carbon.

The manganese valence state of the surface of the manganese dioxide particles, as measured with X-ray photoelectron spectroscopy using monochromatic Al K_{α} X-rays, has a peak position for the Mn2p_{3/2} edge of 642 eV-642.5 eV and a peak position difference for the Mn3s_{-1/2} and Mn3s_{1/2} edges of 4-5 eV. The X-ray photoelectron spectroscopy may be performed using monochromatic Al K_{α} X-rays having a photon energy of 1486.6 eV.

Before modification, the manganese dioxide particles may comprise beta manganese dioxide, gamma manganese dioxide, delta manganese dioxide, electrolytic manganese dioxide, pyrolusite, birnessite, ramsdellite, hollandite, romanechite, todorokite, lithiophorite, chalcophanite, sodium or potassium rich birnessite, cryptomelane, buserite, manganese oxide, a spinel form of manganese dioxide and any combination thereof, preferably electrolytic manganese dioxide or beta manganese dioxide.

The electrically conductive additive may be any one or more of carbon, nickel, copper, cobalt, titanium and iron.

The carbon may be expanded graphite or carbon black, or a mixture thereof.

The binder may be selected from any one or more of polyethylene, polyacrylic acid, polytetrafluoroethylene (PTFE), polyvinylidene fluoride (PVDF), styrene butadiene rubber (SBR), modified styrene-butadiene copolymer (PSBR), sodium carboxymethyl cellulose (CMC), polyvinyl acetate (PVA), polyethylene glycol (PEG), polybutyl acrylate (PBA), polyurethane (PU), polyacrylonitrile, polypyrrole, polyaniline, perflurosulfonic acid, and poly(3,4-ethylenedioxythiophene).

According to a second aspect there is provided a secondary aqueous manganese dioxide battery, comprising a cathode comprising the cathode material described above, a zinc anode, a separator for separating said cathode from said anode, and an aqueous electrolyte comprising zinc and manganese ions.

With such a battery comprising such a cathode material a significant improvement in energy density may be obtained compared to batteries having conventional carbon additives on the cathode, and the battery exhibits noteworthy battery performance.

It is believed that with the present cathode material there is an improved electrical conductivity and increased number of oxygen vacancies, which facilitate cation insertion in the material as compared to standard material.

Without being bound to any theory, it is believed that the modified manganese dioxide particles may also suppress formation of precipitates on the surface, such as formation of Zn₄(OH)₆(SO₄)·5H₂O when used with an aqueous zinc sulfate-based electrolyte, and uphold the electrode electrochemically active during battery cycling. As 20-100% of an average bulk composition of the manganese dioxide particles has a beta manganese dioxide structure, the battery may cycle repeatedly and present an improvement in specific capacity over cycles. The closer to 100% beta manganese dioxide structure, the better the performance of the cathode material when used in a secondary aqueous manganese dioxide battery.

The electrolyte may comprise zinc and manganese ions at a range from 0.01 to 5 molars, preferably 0.1 to 3 molars, and have a pH from 1 to 7, preferably from 4 to 5.

The aqueous electrolyte may comprise any one or more of sulfate, acetate, citrate, iodide, chloride, perchlorate, nitrate, phosphate, triflate, bis(trifluromethanesulfonyl)imide, tetrafluoroborate, and bromide, preferably sulfate anion. The aqueous electrolyte may besides water comprise any one or more of alcohols, nitriles, carbonates, ethers, sulfoxides, glycols, esters, and amines.

The battery may have a configuration selected from cylindrical, button cell, bobbin, planar, prismatic, or flooded configuration.

The battery may further comprise a separator, wherein the separator is selected from polyethylene, cellulose, cellulose-ceramic oxide, silica glass fiber, polypropylene, cellophane, polyvinylalcohol, polytetrafluroethylene, polyvinyl chloride, polyvinylidene fluoride, nylon, porous silica, alumina ceramic membranes, fibers and any combination thereof.

The zinc anode may be a solid zinc sheet, a zinc mesh, a zinc rod, compressed zinc powder or a zinc layer on a current collector. The zinc may be a zinc alloy. Non-limiting examples of zinc alloys are zinc with lead, vanadium, chromium, manganese, iron, cobalt, nickel, cadmium, tungsten, bismuth, tin, indium, antimony, copper and/or titanium.

The battery may further comprise a positive current collector comprising any one or more of carbon, titanium, nickel, cobalt, copper, iron, molybdenum and stainless steel.

The battery may further comprise a negative current collector comprising any one or more of carbon, boron, lead, vanadium, chromium, manganese, iron, cobalt, nickel, cadmium, tungsten, bismuth, tin, indium, antimony, copper, titanium and zinc metal.

According to a third aspect there is provided a method for producing a cathode material for a secondary aqueous manganese dioxide battery the method, the method comprising: providing manganese dioxide particles, providing a coating solution comprising an organic carbon source, the coating solution having an organic carbon concentration of 0.5 to 3 % by weight of the manganese dioxide particles, coating the manganese dioxide particles with the coating solution, drying the carbon coated manganese dioxide particles, and heating the dried carbon coated manganese dioxide particles.

The organic carbon concentration of the coating solution may be 0.5 to 3%, by weight of the manganese dioxide particles.

The coating solution may comprise a solvent selected from water, ethanol in water, e.g. 20% ethanol, or other solvents known in the art as suitable for dissolving organic carbons.

The carbon coated manganese dioxide particles may be dried at room temperature or at higher temperatures such as a temperature between 50 and 100 °C, or 50 to 80 °C.

Drying of the coated manganese dioxide particles may take place in vacuum and/or during stirring.

Heating of the dried carbon coated manganese dioxide particles may take place at a temperature of up to 450 °C during a time period of less than or equal to 30 minutes, and at a heating rate of 2-20 °C/min, and optionally in an inert atmosphere.

The heating may take place at a temperature of 410 to 430 °C during a time period of 2 to 10 minutes and at a heating rate of 5-15 °C/min.

The organic carbon source may be selected from one or more of monosaccharides, disaccharides, maltodextrin, starch, and hydrogenated cellulose.

In one example the organic carbon source is a carbohydrate such as sucrose.

Using this method, the cathode material described above may be obtained.

### BRIEF DESCRIPTION OF THE DRAWINGS

Fig. 1 shows a scanning electron micrograph image of a standard manganese dioxide material, reference material.
Fig. 2 shows a scanning electron micrograph image of a heat-treated reference material with 0% sucrose (0% Sc).
Fig. 3 shows a scanning electron micrograph image of a heat-treated and surface modified reference material with 1.5% sucrose (1.5% Sc).
Fig. 4 shows a scanning electron micrograph image of a heat-treated and surface modified reference material with 7.5% sucrose (7.5% Sc).
Fig. 5 shows a scanning electron micrograph image of a heat-treated and surface modified reference material with 15% sucrose (15% Sc).
Fig. 6 shows powder X-ray diffraction patterns of the reference material and heat-treated and surface modified reference material with 0%, 1.5%, 7.5% and 15% Sc, respectively.
Fig. 7 shows a cycle summary of the reference material and heat-treated and surface modified reference material with 0%, 1.5%, 7.5% and 15% Sc, respectively, with their respective active mass loadings over 100 cycles at a rate of 60 mAh/g.
Fig. 8 shows galvanostatic intermittent titration technique (GITT) data of the reference material in both discharge (top figure) and charge (bottom figure). In both directions, a 2 minute galvanostatic pulse of 50 mAh/g was applied with a following 30 minutes rest step. The resistance shown on the right y-axes corresponds to the IR-drop at each galvanostatic pulse.
Fig. 9 shows galvanostatic intermittent titration technique (GITT) data of the 1.5% Sc heat-treated sample in both discharge (top figure) and charge (bottom figure). In both directions, a 2 minutes galvanostatic pulse of 50 mA/g was applied with a following 30 minutes rest step. The resistance shown on the right y-axes corresponds to the IR-drop at each galvanostatic pulse.
Fig. 10 shows galvanostatic intermittent titration technique (GITT) data of the 7.5% Sc heat-treated sample in both discharge (top figure) and charge (bottom figure). In both directions, a 2 minutes galvanostatic pulse of 50 mA g-1 was applied with a following 30 minutes rest step. The resistance shown on the right y-axes corresponds to the IR-drop at each galvanostatic pulse.
Fig. 11 shows cyclic voltammograms of the heat-treated and surface modified reference material with 1.5% Sc as a function of scan rate (0.2 - 10 mV/s) over the potential window of 0.9-2.0 V.
Fig. 12 shows the specific discharge capacity of the reference material and heat-treated and surface modified reference material with 1.5%, 7.5% and 15% Sc, respectively, based on their cyclic voltammograms.
Fig. 13 shows powder X-ray diffraction patterns of heat-treated and surface modified reference material with 0%, 1.5%, 3%, 4.5% and 6% Sc, respectively, to identify the phase transformation from manganese dioxide to Mn₃O₄.
Fig. 14 shows powder X-ray diffraction patterns of heat-treated and surface modified reference material with 0%, 0.25%, 0.5%, 1% and 3% Sc to identify the optimum concentration of sucrose addition in the carbothermal reduction process.
Fig. 15 shows deconvolution of the Mn2s and Mn3p X-ray photoelectron spectroscopy (XPS) spectra measured of the heat-treated reference material (0% Sc).
Fig. 16 shows deconvolution of the Mn2s and Mn3p XPS spectra measured of the heat-treated and surface modified reference material wit 0.25% Sc.
Fig. 17 shows deconvolution of the Mn2s and Mn3p XPS spectra measured of the heat-treated and surface modified reference material with 0.5% Sc.
Fig. 18 shows deconvolution of the Mn2s and Mn3p XPS spectra measured of the heat-treated and surface modified reference material with 1% Sc.
Fig. 19 shows deconvolution of the Mn2s and Mn3p XPS spectra measured of the heat-treated and surface modified reference material with 3% Sc.
Fig. 20 shows a cycle summary of the studied modified manganese dioxide materials over 20 cycles at a rate of 10 mAh/g.
Fig. 21 shows discharge curves of the studied modified manganese dioxide materials during the first cycle at a discharge rate of 10 mAh/g.
Fig. 22 shows discharge curves of the studied modified manganese dioxide materials during the second cycle at a discharge rate of 10 mAh/g.

### EXPERIMENTAL

### Cathode

### Material

The cathode material comprises a compressed mixture of modified manganese dioxide particles, an electrically conductive additive and a binder.

**Manganese dioxide particles.** Non-modified manganese dioxide particles may comprise beta manganese dioxide, gamma manganese dioxide, delta manganese dioxide, electrolytic manganese dioxide, pyrolusite, birnessite, ramsdellite, hollandite, romanechite, todorokite, lithiophorite, chalcophanite, sodium or potassium rich birnessite, cryptomelane, buserite, manganese oxide, a spinel form of manganese dioxide and any combination thereof. The manganese dioxide particles may have a morphology including wires, fibers, cubes, platelets, spheres and uneven morphology. Manganese dioxide particles may have an average diameter of 5 nm-50 µm, preferably 1-10 µm.

**Conductive additive.** As conductive additive any one or more of carbon, nickel, copper, cobalt, titanium and iron may be used. If carbon is used it may be expanded graphite or carbon black, or a mixture thereof.

**Binder.** The binder may be selected from any one or more of polyethylene, polyacrylic acid, polytetrafluoroethylene (PTFE), polyvinylidene fluoride (PVDF), styrene butadiene rubber (SBR), modified styrene-butadiene copolymer (PSBR), sodium carboxymethyl cellulose (CMC), polyvinyl acetate (PVA), polyethylene glycol (PEG), polybutyl acrylate (PBA), polyurethane (PU), polyacrylonitrile, polypyrrole, polyaniline, perflurosulfonic acid, and poly(3,4-ethylenedioxythiophene).

### Modification of manganese dioxide particles - carbothermal treatment

An organic carbon source is dissolved in an aqueous solvent such as water or ethanol in water, e.g. 20% ethanol, to a concentration of 0.01 to 7.5 % by weight of the manganese dioxide particles to be modified.

The organic carbon source may be any one or more of monosaccharides, disaccharides, maltodextrin, starch, and hydrogenated cellulose.

The amount of solvent is adjusted to reach full coverage of the manganese dioxide particles, such that the dissolved carbon source is coated evenly over the particle surfaces.

The wet powder is thereafter slowly dried in room temperature or on a heating plate set to a temperature of maximum 100 °C, *e.g.* 80 °C. Optionally, such drying may be facilitated by stirring the wet powder while drying and optionally the drying may be facilitated by vacuum that may allow the dissolved organic carbon source to penetrate the porosity of the manganese dioxide particles and thereby ensure complete surface modification.

Thereafter, the coated and dried manganese dioxide particles are heat treated, preferably in an inert atmosphere, such as nitrogen or argon, to a maximum temperature of 450 °C, preferably between 410 and 430 °C, for a duration of 1 to 30 min, preferably between 2 and 10 min. The heating rate can be within the interval 2-20 °C/min, preferably 5-15 °C/min.

### Secondary aqueous manganese dioxide battery

### Material

### The secondary aqueous manganese dioxide battery comprises:

**A cathode.** The cathode comprises the cathode material comprising modified manganese dioxide particles as described above.

**A separator.** The separator may be any one or combination of polyethylene, cellulose, cellulose-ceramic oxide, silica glass fiber, polypropylene, cellophane, polyvinylalcohol, polytetrafluroethylene, polyvinyl chloride, polyvinylidene fluoride, nylon, porous silica, alumina ceramic membranes and fibers.

**An electrolyte.** The electrolyte contains dissolved zinc salt and manganese salt and the anion may be any one or combination of sulfate, acetate, citrate, iodide, chloride, perchlorate, nitrate, phosphate, triflate, bis(trifluromethanesulfonyl)imide, tetrafluoroborate, and bromide to mention a few, however the preferred anion is the sulfate anion. The dissolved zinc and manganese salts range from about 0.01 to 5 molars and preferably 0.1 to 3 molars. The pH of the electrolyte range between 1-7, but more preferably 4-5. The electrolyte is an aqueous based electrolyte and may besides water also comprise alcohols, nitriles, carbonates, ethers, sulfoxides, glycols, glycerols, esters, and amines.

**A negative electrode.** The negative electrode may be a solid sheet, mesh, rod or powder of zinc or a zinc layer on a current collector. The negative electrode may also be zinc alloy. Examples of zinc alloys are zinc with lead, vanadium, chromium, manganese, iron, cobalt, nickel, cadmium, tungsten, bismuth, tin, indium, antimony, copper and/or titanium.

**A positive current collector.** Positive current collector is an electrically conductive support for manganese dioxide which may be comprised of any one or combination of carbon, titanium, nickel, cobalt, copper, iron, molybdenum and stainless steel.

**A negative current collector.** The negative current collector is an electrically conductive support for zinc which may be comprised of any one or combination of carbon, boron, lead, vanadium, chromium, manganese, iron, cobalt, nickel, cadmium, tungsten, bismuth, tin, indium, antimony, copper, titanium and zinc metal.

### Secondary aqueous manganese dioxide battery used in the experiments

The cathode material comprised electrolytic manganese dioxide particles modified by carbothermal treatment using sucrose as the organic carbon source in a concentration of 0 to 15 % by weight of the manganese dioxide particles. Irregular manganese dioxide particles having a size of about 10 µm were used. The different cathode materials were dried at 80°C and heat-treated for 5 minutes at 420 °C under N₂ atmosphere.

The cathode comprised a compressed mixture of the such modified manganese dioxide particles, an electrically conductive additive being expanded graphite, and a binder being polytetrafluoroethylene.

In one secondary aqueous manganese dioxide battery used in some of the below experiments, the cathode material comprised 88.5 weight% modified manganese dioxide powder, 7 weight% BNB90 expanded graphite, 6 weight% electrolyte and 1.5 weight% polytetrafluoroethylene binder. The different blends were worked into a paste and rolled to a thickness of 250 µm. The different pastes were thereafter pressed onto nickel mesh using a uniaxial press at 30 MPa. The electrolyte was prepared by dissolving 2 molar zinc sulfate and 0.1 molar manganese sulfate in deionized water. The counter electrodes used were zinc foil sheets with a thickness of 0.25 mm. One layer of microporous polyethylene membrane with a thickness of 0.175 mm separated the two electrodes in each cell. The cells were pressured with acrylic pieces and sealed before placing them in a container with the electrolyte. All cells were assembled in a two-electrode setup without a reference electrode. The cells were assembled in a pouch cell design, pressured with clamps and sealed after injecting the cell with electrolyte. All cells were assembled in a two-electrode setup without a reference electrode.

In another secondary aqueous manganese dioxide battery used in some of the below experiments, 90 weight% manganese dioxide powder, 8 weight% C45 carbon black and 2 weight% PSBR100 modified styrene-butadiene copolymer binder were mixed. The blend was worked into a slurry with deionized water and casted onto stainless steel foil to a wet thickness of 100 µm. The counter electrodes were prepared in similar manner - 99 weight% zinc powder and 1 weight% PSBR100 modified styrene-butadiene copolymer binder was mixed and casted onto copper foil to a wet thickness of 20 µm. One layer of polyethylene membrane with a thickness of 0.175 mm separated the two electrodes in each cell. The cells were assembled in a pouch cell design, pressured with clamps and sealed after injecting the cell with electrolyte. All cells were assembled in a two-electrode setup without a reference electrode.

### Experimental results

The different cathode materials were evaluated in secondary aqueous zinc-manganese dioxide batteries. In the first example, five different manganese dioxide materials were evaluated in 2 molar zinc sulfate and 0.1 molar manganese sulfate electrolyte. The five different manganese dioxide materials are summarized in Table 1 with their respective carbon content.

**TABLE 1.**

| | **Reference** | 420 °C, 5 min, N₂, **0% Sc** | 420 °C, 5 min, N₂, **1.5% Sc** | 420 °C, 5 min, N₂, **7.5% Sc** | 420 °C, 5 min, N₂, **15% Sc** |
|---|---|---|---|---|---|
| **C (%)** | 0.0198 | 0.0055 | 0.0060 | 0.270 | 1.95 |
| **X-ray diffraction pattern** | γ-MnO₂ | β-MnO₂ | β-MnO₂ | Mn₃O₄ | Mn₃O₄ |

Gamma-manganese dioxide consists of base building MnOeoctahedra forming two intergrown manganese dioxide polymorphs, ramsdellite and beta-manganese dioxide (pyrolusite). Ramsdellite has an orthorhombic 2×1 tunnel structure and beta-manganese dioxide have a tetragonal 1×1 tunnel structure. Defects caused by stacking disorder and twinning of ramsdellite results in the commonly known gamma-manganese dioxide structure. Herein referred as the carbothermal reduction process, the reference material was heat-treated for 5 minutes at 420 °C under N₂ atmosphere with different concentrations of sucrose.

Heat-treatment of gamma-manganese dioxide (Reference) with no added sucrose (0% Sc) transformed the material to a single-phase beta-manganese dioxide. Depending on the amount of sucrose used to modify the active material, the manganese dioxide may under certain conditions be reduced to the less electrochemically active spinel phase, Mn₃O₄. When all manganese dioxide material, including the bulk, transformed to Mn₃O₄, the carbon content increased rapidly with increasing sucrose addition as shown in the 7.5-15% Sc samples in Table 1.

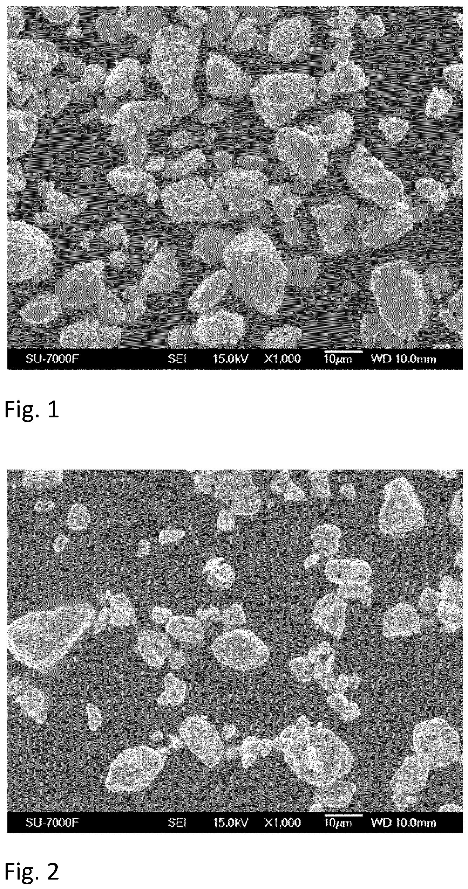

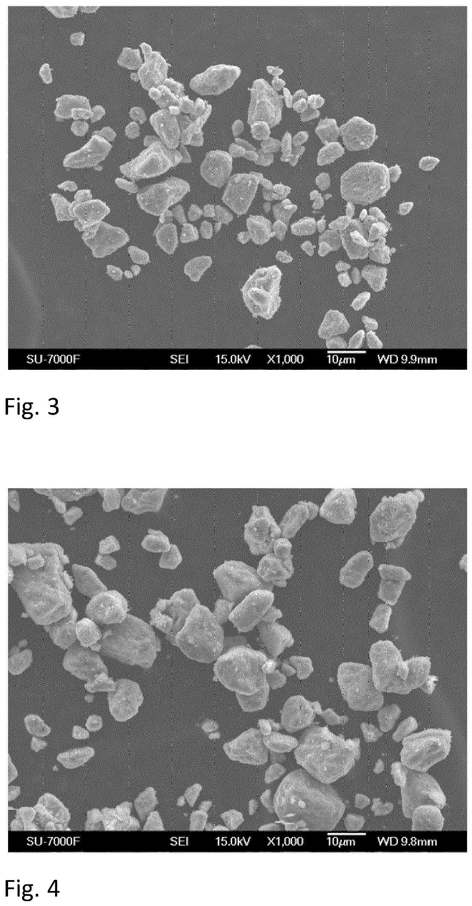

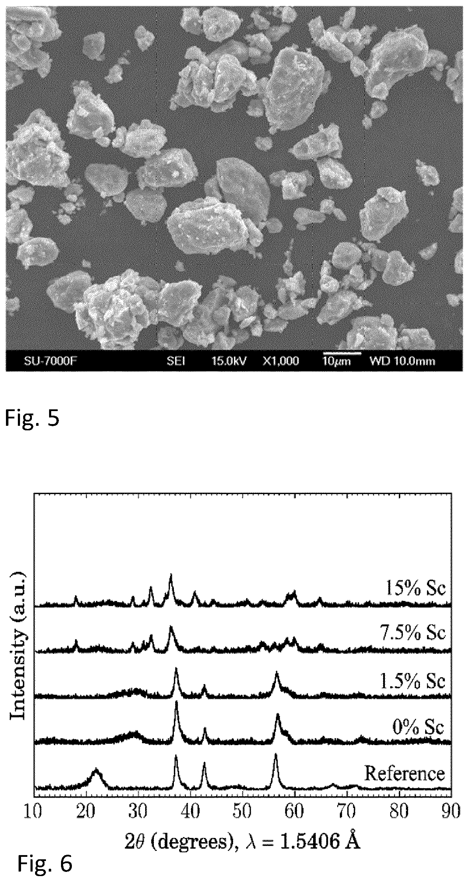

Scanning electron microscopy images were captured using a field emission microscope to study the morphology of the samples. The reference sample micrograph image in Figure 1 shows agglomerated particles with an average size of 10 µm. After heat-treatment of the reference shown in Figure 2 and with the sucrose added in the samples shown in Figure 3-5, the particle size remained the same. Phase analysis was done by recording powder X-ray patterns with a powder diffractometer and Cu Kα radiation (λ = 1.5406 Å). Figure 6 shows the X-ray diffraction patterns of the five different manganese dioxide materials. The partially twinned gamma-manganese dioxide material (reference), was indexed as a pseudo-hexagonal unit cell (epsilon-manganese dioxide) with an overlapping (110) reflection contributed from the orthorhombic ramsdellite. The heat-treated sample without sucrose added (0% Sc), resulted in a loss of structural water and formed a defect-free tetragonal beta-manganese dioxide phase. This also applied to the 1.5% Sc sample. Higher amounts than 1.5% of Sc resulted in a reduction of the manganese dioxide to the electrochemically inactive Mn₃O₄ phase.

Secondary aqueous sulfate zinc-manganese dioxide cells' electrolyte was prepared by dissolving 2 molar zinc sulfate and 0.1 molar manganese sulfate in deionized water. Preparation of manganese dioxide electrodes for evaluating the battery cycling performance involved mixing of 88.5 weight% manganese dioxide powder, 7 weight% BNB90 expanded graphite, 6 weight% electrolyte and 1.5 weight% polytetrafluoroethylene binder. The blend was worked into a paste and rolled to a thickness of 250 µm. The paste was thereafter pressed into a nickel wire screen (100 mesh) using a uniaxial press at 30 MPa. The counter electrodes used were zinc foil sheets with a thickness of 0.25 mm. One layer of microporous polyethylene membrane with a thickness of 0.175 mm separated the two electrodes in each cell. The cells were pressured with acrylic pieces and sealed before placing them in a container with electrolyte. All cells were assembled in a two-electrode setup without a reference electrode.

The reaction mechanism of the manganese dioxide in the sulfate electrolyte includes two faradaic reactions during discharge and charge: 1) dissolution and deposition of a hydrated layered phase, 2) zinc (II) ion insertion and extraction causing unit cell expansion and contraction of the manganese dioxide structure. Also, a non-faradaic reaction of zinc sulfate hydroxide, Zn₄(OH)₆(SO₄)·5H₂O, takes place, when it precipitates and dissolves at discharge and charge, respectively. In this sulfate solution, 0.1 molar manganese sulfate was added to suppress manganese dioxide dissolution during discharge. The zinc electrode's capacity was excessive to diminish its effect on the manganese dioxide electrode. The zinc electrode had a good electrochemical reversibility with insignificant effect on the manganese dioxide electrode. The reaction mechanism of the zinc electrode involved dissolution of zinc (0) metal to zinc (II) ions during discharge and electrodeposition of zinc (0) from zinc (II) ions during charge.

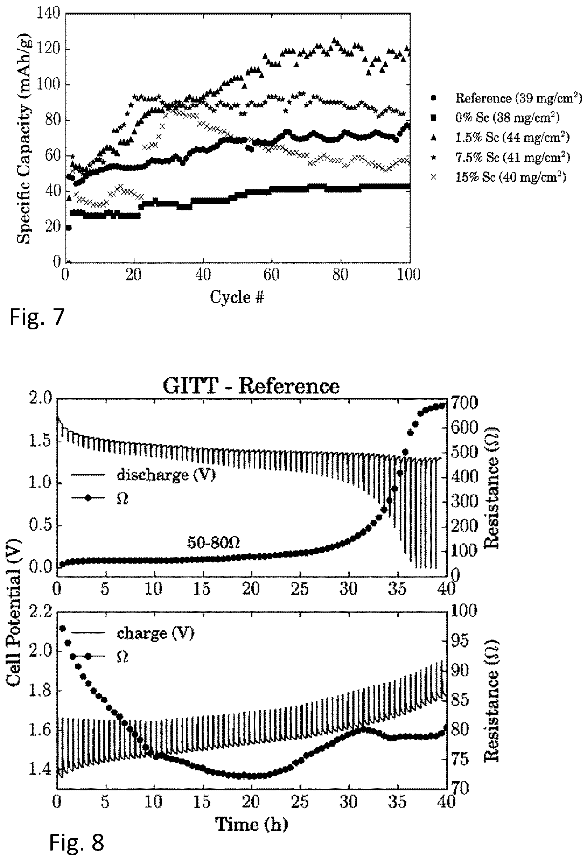

Investigation of manganese dioxide materials' battery cycling performance is shown in Figure 7 with their respective active mass loading. The electrochemical cells were evaluated with a current source at a current rate of 60 mA g⁻¹. The cycling protocols had a 10 min rest step between each charge and discharge step and voltage cut-offs at 2 and 0.9 V for charge and discharge, respectively. At charge, a constant voltage step was used at 2 V, which was ended when the measured charge current went below 12 mA g⁻¹. The 1.5% Sc cell showed the best performance and had the highest specific discharge capacity of 120 mAh g⁻¹ after 100 cycles. The 7.5% and 15% Sc modified materials performed inferior compared to the 1.5% Sc sample. These results are likely correlated with the phase transformation of manganese dioxide to the less conductive Mn₃O₄ during the carbothermal heat-treatment. The results indicated that a partial reduction of the manganese dioxide material without transforming it to Mn₃O₄ improved the battery performance compared to the reference.

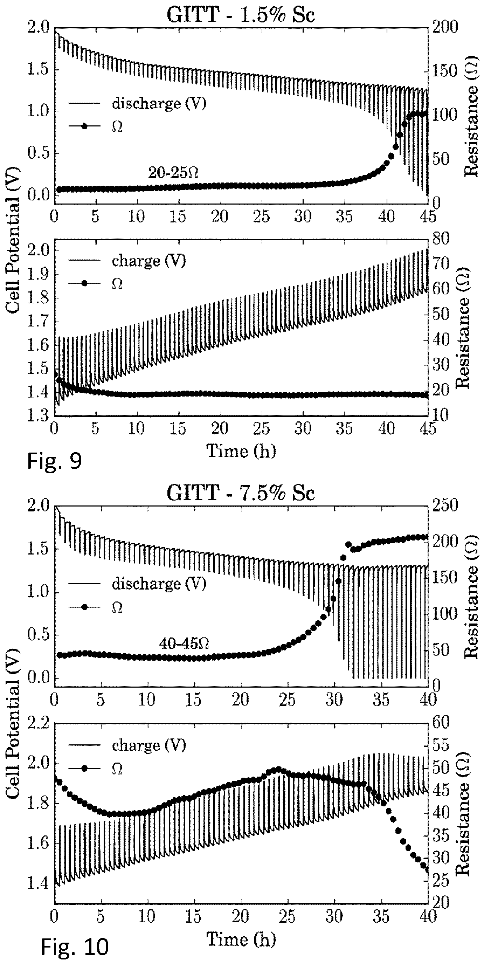

The galvanostatic intermittent titration technique (GITT) was used to study the resistance evolution during a full charge-discharge cycle. Figure 8-10 shows the GITT data of the reference, 1.5% and 7.5% Sc samples. At each pulse, the IR-drop resistance was evaluated over one charge-discharge cycle. A galvanostatic pulse of 50 mA g⁻¹was applied with a following 30 minutes rest step to allow the cell to reach steady-state. The reference showed a flat resistance region of 50-80 Ω over the first 25 hours of discharge until the resistance increased to 700 Ω. The insulating zinc sulfate hydroxide precipitate caused the significant increase in resistance in the end of the discharge. During charge, relatively even resistance values of 72-97 Ω were observed. The 1.5% Sc material had significantly lower resistances in both charge and discharge. The flat resistance region during discharge decreased to 20-25 Ω and the resistance increased to 100 Ω when the zinc sulfate hydroxide precipitate partially blocked the surface. These lower resistances indicated strongly an improved electrical conductivity of the material and agreed with the superior battery cycling performance compared to the other samples. The resistance of 7.5% Sc sample during charge and discharge were generally higher than the 1.5% Sc sample. The flat resistance region during discharge was 40-45 Ω and had a highest resistance point of 210 Ω in the end. The present Mn₃O₄ in the 7.5% Sc sample likely contributed to the increased resistance.

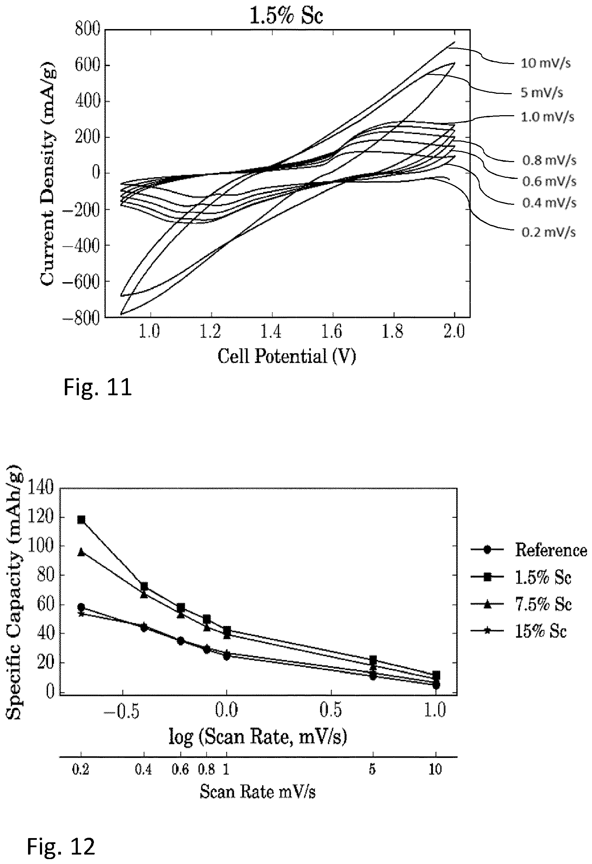

Cyclic voltammograms of the 1.5% Sc sample shown in Figure 11 were recorded with a potentiostat with varying scan rates of 0.2-10 mV s⁻¹ and a potential window of 0.9-2.0 V. At the scan rates of 0.2-1 mV s⁻¹, electron exchange peaks in both oxidation and reduction were evident whereas the higher scan rates showed close to zero capacity and more of a capacitor behavior. Figure 12 shows the specific discharge capacity as a function of varying scan rates of the reference, 1.5%, 7.5% and 15% Sc samples. The specific discharge capacities are based on the integrated area in reduction from their respective cyclic voltammograms. These results demonstrate the rate capability of the materials and shows a superior rate performance of the 1.5% Sc sample compared to the others.

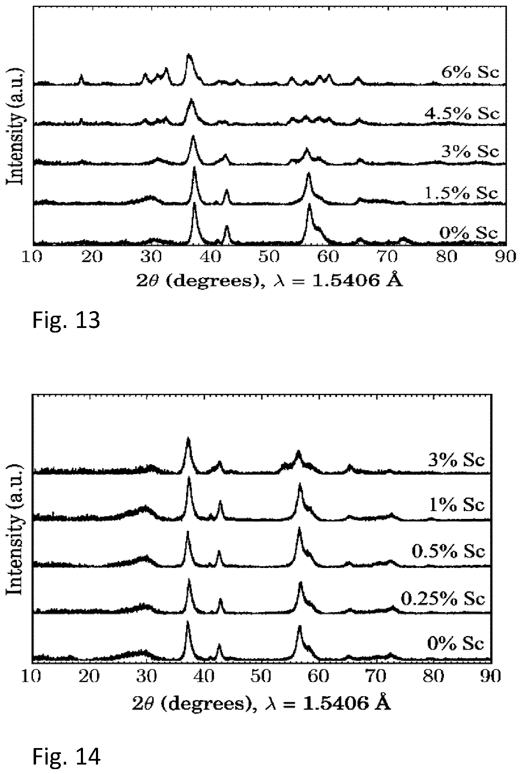

In the second example, three new modified manganese dioxide materials were prepared to narrow down the optimum concentration of sucrose used during the carbothermal reduction of the reference material to identify the transformation to inactive Mn₃O₄. Figure 13 shows the X-ray diffraction patterns of the 0, 1.5, 3, 4.5 and 6% Sc samples. The 0-1.5% Sc samples apparent peaks of the (100), (101) and (102) reflections at 37.1°, 42.6° and 56.7°, respectively, shifted to lower angles with increased sucrose concentration. These reflections corresponded to the beta-manganese dioxide structure. At higher concentrations than 1.5% Sc, arising peaks at 54.1° and 58.1° indicated that the manganese dioxide transformed to Mn₃O₄. Thus, the optimum concentration of the partially reduced surface while maintaining the manganese dioxide structure were likely to be found at the 0-1.5% concentrations of sucrose. Table 2 shows the respective phase and carbon content of the samples.

**TABLE 2.**

| | **Reference** | 420 °C, 5 min, N₂, **0% Sc** | 420 °C, 5 min, N₂, **1.5% Sc** | 420 °C, 5 min, N₂, **3% Sc** | 420 °C, 5 min, N₂, **4.5% Sc** | 420 °C, 5 min, N₂, **6% Sc** |
|---|---|---|---|---|---|---|
| **C (%)** | 0.0198 | 0.0055 | 0.0060 | 0.0114 | 0.0210 | 0.125 |
| **X-ray diffraction pattern** | γ-MnO₂ | β-MnO₂ | β-MnO₂ | β-MnO_{2/} Mn₃O₄ | Mn₃O₄ | Mn₃O₄ |

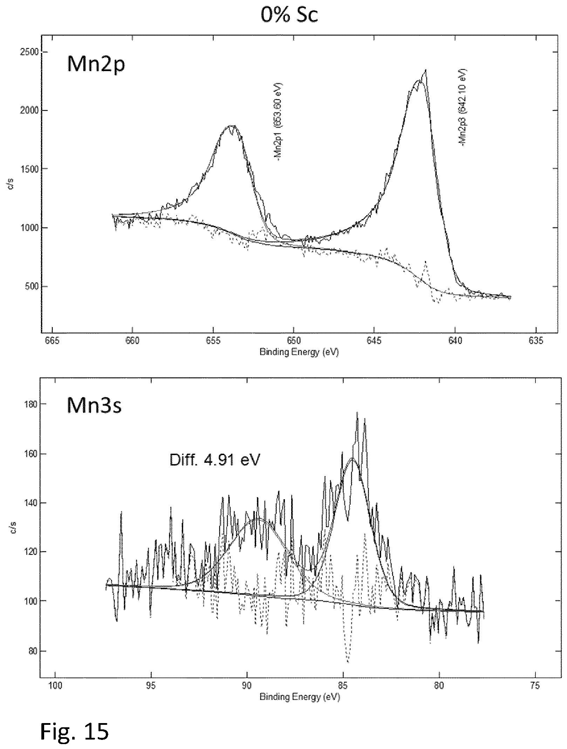

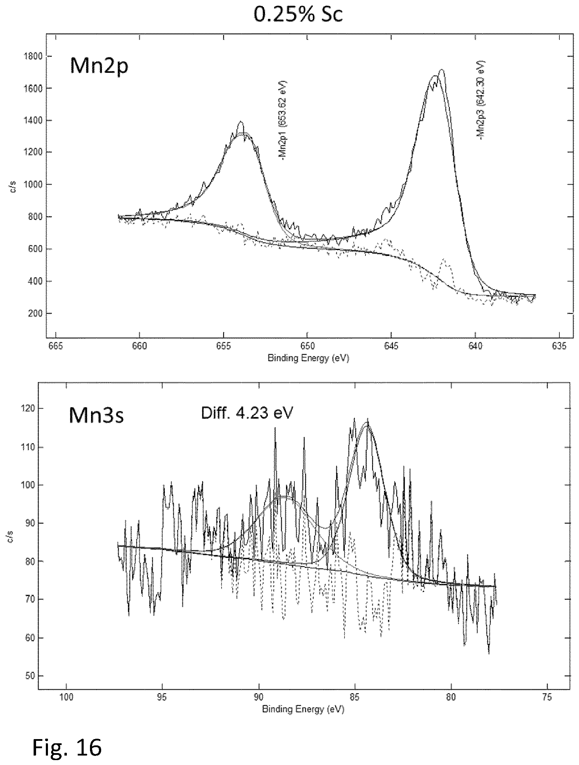

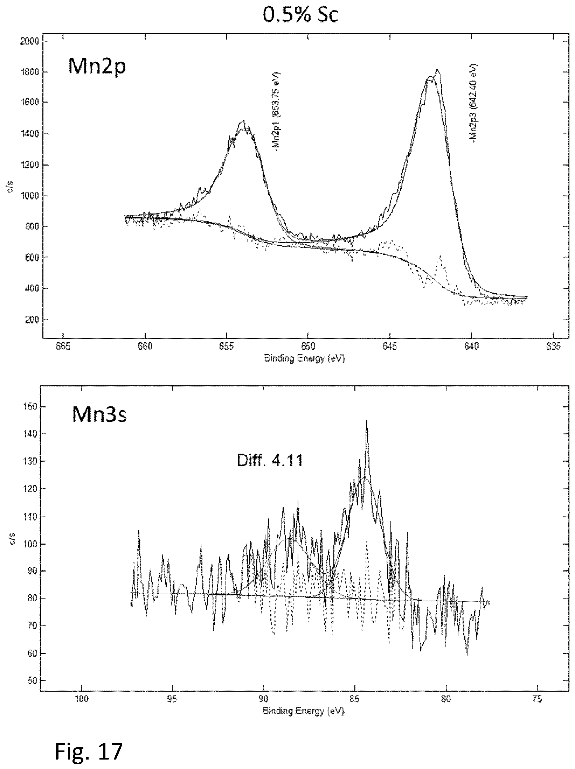

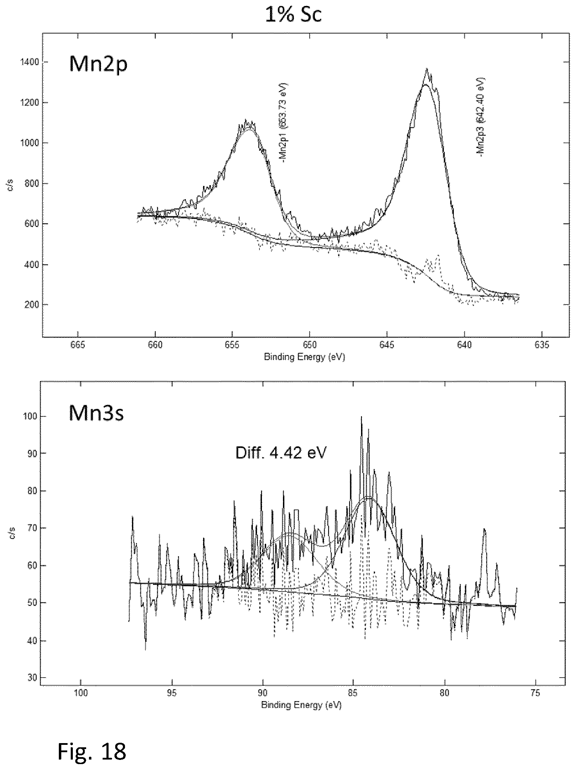

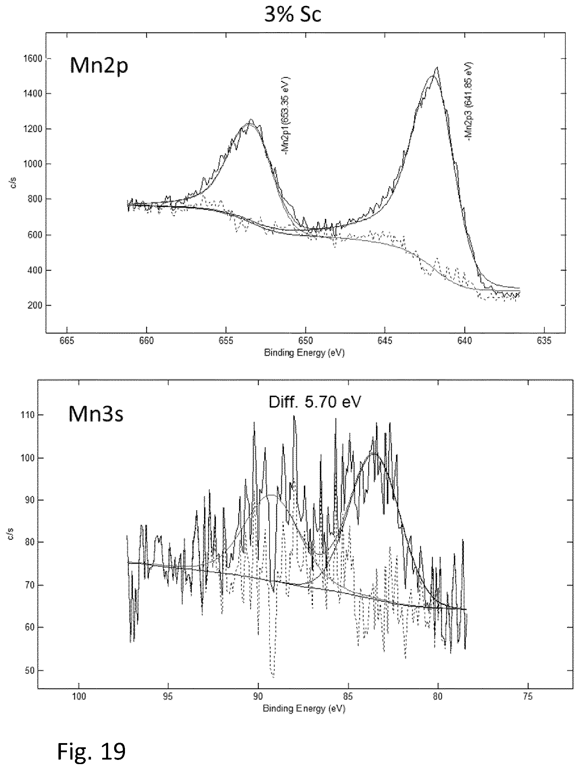

In the third example, additional modified manganese materials were prepared to identify the optimum concentration of sucrose used in the carbothermal reduction process of the reference material. Herein, phase transformation to Mn₃O₄ was limited. Thus, partially reduced surfaces of the manganese dioxide materials were evaluated in the sucrose concentrations of 0-3%. Figure 14 shows the collected X-ray diffraction patterns of the samples 0, 0.25, 0.5, 1 and 3% Sc. In the 0-1% Sc samples, peaks shifted to lower angles with increased sucrose concentration while upholding its manganese dioxide structure. However, arising peaks at 54.1° and 58.1° for the 3% Sc sample indicated an initiated phase transformation to Mn₃O₄. The possible manganese valence states of the sample surfaces were confirmed with X-ray photoelectron spectroscopy using monochromatic Al K line (1486.6 eV) as the X-ray source. The full width at half maximum energy resolution of the spectrometer with a 100 µm beam size was 0.646 eV. Calibration used two reference points for the spectrometer energy scale: Au 4f₇ (83.96 eV) and Cu 2p₃ (932.62 eV). Figure 15-19 shows the deconvoluted Mn2p and Mn3s energy spectra of the measured samples. Table 3 summarizes the Mn2p_{3/2}, ΔMn(2p_{1/2}-2p_{3/2}) and ΔMn(3s_{-1/2}-3s_{1/2}) peak positions from these spectra. The peak position of Mn2p_{3/2} characterized the possible manganese valence state. The energy difference of the Mn2p and Mn3s peaks characterized the metal or oxide states and the oxide types, respectively. The heat-treated sample with no sucrose (0% Sc) showed manganese (III) and (IV) features while the 3% Sc sample showed the mixture of manganese (II) and (III) features. The rest of the samples between 0.25-1% Sc showed mixtures of manganese (II) and (IV) features. These results corroborated the higher manganese valence state of the heat-treated sample with no added sucrose, while the surface was partially reduced but with the manganese dioxide structure intact for the 0.25-1% Sc samples, until the surface transformed to Mn₃O₄ for the 3% Sc sample.

**TABLE 3.**

| | **Mn2p**_{**3/**2} | **ΔMn(2p_{1/2}-2p_{3/2})** | **ΔMn(3s_{-1/2}-3s_{1/2})** | **Possible states** |
|---|---|---|---|---|
| 420 °C, 5 min, N₂, **0% Sc** | 642.09 eV | 11.51 eV | 4.95 eV | Mn(III,IV) |
| 420 °C, 5 min, N₂, **0.25% Sc** | 642.32 eV | 11.29 eV | 4.23 eV | Mn(II,IV) |
| 420 °C, 5 min, N₂, **0.5% Sc** | 642.42 eV | 11.32 eV | 4.11 eV | Mn(II,IV) |
| 420 °C, 5 min, N₂, **1% Sc** | 642.40 eV | 11.33 eV | 4.42 eV | Mn(II,IV) |
| 420 °C, 5 min, N₂, **3% Sc** | 641.87 eV | 11.46 eV | 5.70 eV | Mn(II,III) |

In this example, 2 molar zinc sulfate, 0.1 molar manganese sulfate and 1 millimolar sodium dodecyl sulfate electrolyte was used to evaluate the 0-3% Sc materials. Preparation of manganese dioxide electrodes for evaluating the battery cycling performance involved mixing 90 weight% manganese dioxide powder, 8 weight% C45 carbon black and 2 weight% PSBR100 modified styrene-butadiene copolymer binder. The blend was worked into a slurry with deionized water and casted onto stainless steel foil to a wet thickness of 100 µm. The counter electrodes were prepared in similar manner - 99 weight% zinc powder and 1 weight% PSBR100 modified styrene-butadiene copolymer binder was mixed and casted onto copper foil to a wet thickness of 20 µm. One layer of polyethylene membrane with a thickness of 0.175 mm separated the two electrodes in each cell. The cells were assembled in a pouch cell design, pressured with clamps and sealed after injecting the cell with electrolyte. All cells were assembled in a two-electrode setup without a reference electrode.

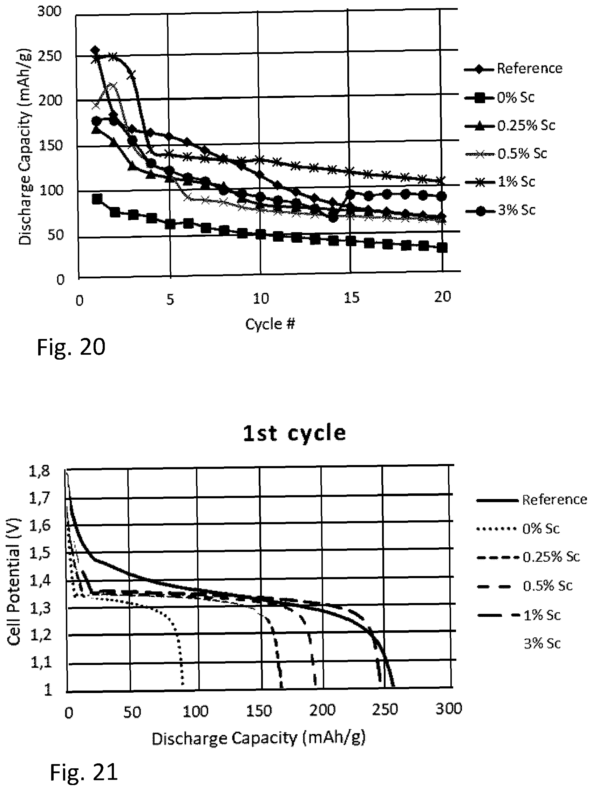

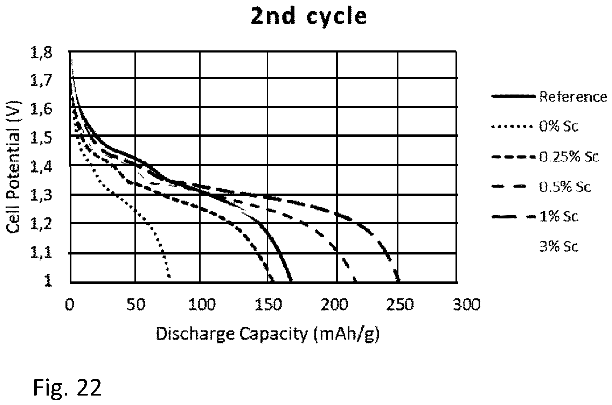

Assessment of the 0-3% Sc samples' battery cycling performance were compared over few cycles and at slow rates to study their intrinsic electrochemical activity. The electrochemical cells were evaluated with a current source at a current rate of 10 mA g⁻¹. The cycling protocols had voltage cut-offs at 1.8 and 1 V for charge and discharge, respectively. At charge, a constant voltage step was used at 1.8 V and ended when the measured condition went below 2 mA g⁻¹. The reference and the 1% Sc cells achieved highest discharge capacities upon the first cycle corresponding to 251 and 249 mAh/g, respectively. In the second cycle, the 0.5% and 1% Sc exhibited the highest capacities. Figure 21-22 shows the discharge curves of the first two cycles. Interestingly, the discharge plateau characteristics were flatter for the modified samples compared to the reference. Moreover, Table 4 highlights the mid-point charge and discharge potentials from the first-second cycle where the lowest potential difference was achieved at 0.5-1% Sc. This resulted from higher electrochemical activity of the materials resulting in lower polarization losses, both favorable characteristics for batteries. Over 20 cycles the 1% Sc material showed superior battery performance compared to the other samples. This material showed promising cell performance for energy dense secondary aqueous sulfate zinc-manganese dioxide batteries.

**TABLE 4.**

| | **Mid-point charge potential (V)** | **Mid-point discharge potential (V)** | **Δ Difference (V)** |
|---|---|---|---|
| **Reference** | 1.496 | 1.349 | 0.147 |
| 420 °C, 5 min, N₂, **0% Sc** | 1.488 | 1.338 | 0.150 |
| 420 °C, 5 min, N₂, **0.25% Sc** | 1.502 | 1.345 | 0.157 |
| 420 °C, 5 min, N₂, **0.5% Sc** | 1.491 | 1.352 | 0.139 |
| 420 °C, 5 min, N₂, **1% Sc** | 1.481 | 1.359 | 0.122 |
| 420 °C, 5 min, N₂, **3% Sc** | 1.486 | 1.338 | 0.148 |

In summary, the experimental results above show the potential of modifying the surface of manganese dioxide material. Higher contents of sucrose than 1.5% used in the carbothermal reduction process transformed the manganese dioxide to the less electrochemically active Mn₃O₄. Thus, a partially reduced active material that kept the manganese dioxide structure intact while generating oxygen vacancies enhanced the battery performance significantly. This facilitates the reaction mechanism taking place of cations insertion while limiting the zinc sulfate hydroxide precipitate insulating the surface. The modified manganese dioxide materials with 0.5-1.5% Sc used in the carbothermal reduction process offers stable cyclability and promising performance as active material in secondary aqueous sulfate zinc-manganese dioxide batteries. With these results, high energy density, respectable cyclability while using low-cost and high abundance materials such as zinc and electrolytic manganese dioxide, makes the secondary aqueous sulfate zinc-manganese dioxide battery a compelling candidate for large scale application like grid storage.

Reference to an element in the singular is not intended to mean "one and only one" unless explicitly so stated, but rather "one or more".

## Claims

1. A cathode material for a secondary aqueous manganese dioxide battery, comprising:
a compressed mixture of
manganese dioxide particles,
**characterized in that**
the manganese dioxide particles are modified such that:
20-100% of an average bulk composition of the manganese dioxide particles has a beta manganese dioxide structure, the rest being other manganese dioxide polymorph structures, Mn₃O₄ or combinations thereof,
the carbon content of the manganese dioxide particles, in the bulk and the surface of the particles, is 0.005-0.01 wt%, and wherein the compressed mixture further comprises an electrical conductive additive and a binder.

2. The cathode material of claim 1, wherein the electrically conductive additive is any one or more of carbon, nickel, copper, cobalt, titanium and iron.

3. The cathode material of claim 1 or 2, wherein the binder is selected from any one or more of polyethylene, polyacrylic acid, polytetrafluoroethylene (PTFE), polyvinylidene fluoride (PVDF), styrene butadiene rubber (SBR), modified styrene-butadiene copolymer (PSBR), sodium carboxymethyl cellulose (CMC), polyvinyl acetate (PVA), polyethylene glycol (PEG), polybutyl acrylate (PBA), polyurethane (PU), polyacrylonitrile, polypyrrole, polyaniline, perflurosulfonic acid, and poly(3,4-ethylenedioxythiophene).

4. A secondary aqueous manganese dioxide battery, comprising:
a cathode comprising the cathode material of any of the preceding claims,
a zinc anode,
a separator for separating said cathode from said anode, and
an aqueous electrolyte comprising zinc and manganese ions.

5. The secondary aqueous manganese dioxide battery of claim 4, wherein the aqueous electrolyte comprises zinc and manganese ions at a range from 0.01 to 5 molars, preferably 0.1 to 3 molars, and has a pH from 1 to 7, preferably from 4 to 5.

6. A method for producing a cathode material for a secondary aqueous manganese dioxide battery the method, comprising:
providing manganese dioxide particles,
providing a coating solution comprising an organic carbon source selected from one or more of monosaccharides, disaccharides, maltodextrin, starch, and hydrogenated cellulose, wherein the coating solution has an organic carbon concentration of 0.5 to 3 % by weight of the manganese dioxide particles,
coating the manganese dioxide particles with the coating solution,
drying the carbon coated manganese dioxide particles, and
heating the dried carbon coated manganese dioxide particles.

7. The method of claim 6, wherein drying of the coated manganese dioxide particles takes place in vacuum and/or during stirring.

8. The method of any of claims 6 to 7, wherein heating of the dried carbon coated manganese dioxide particles takes place at a temperature of up to 450 °C during a time period of less than or equal to 30 minutes, and at a heating rate of 2-20 °C/min, and optionally in an inert atmosphere.

## Patentansprüche

1. Kathodenmaterial für eine wässrige Mangandioxidsekundärbatterie, Folgendes umfassend:
ein komprimiertes Gemisch von Mangandioxidpartikeln,
**dadurch gekennzeichnet, dass**
die Mangandioxidpartikel so modifiziert sind, dass:
20-100 % einer durchschnittlichen Massenzusammensetzung der Mangandioxidpartikel eine Beta-Mangandioxidstruktur aufweisen, der Rest andere polymorphe Mangandioxidstrukturen, Mn₃O₄ oder Kombinationen davon sind,
der Kohlenstoffgehalt der Mangandioxidpartikel in der Masse und der Oberfläche der Partikel 0,005-0,01 Gew.-% beträgt, und wobei das komprimierte Gemisch ferner ein elektrisch leitfähiges Zusatzmittel und ein Bindemittel umfasst.

2. Kathodenmaterial nach Anspruch 1, wobei das elektrisch leitfähige Zusatzmittel eines oder mehrere von Kohlenstoff, Nickel, Kupfer, Kobalt, Titan und Eisen ist.

3. Kathodenmaterial nach Anspruch 1 oder 2, wobei das Bindemittel ausgewählt ist aus einem oder mehreren von Polyethylen, Polyacrylsäure, Polytetrafluorethylen (PTFE), Polyvinylidenfluorid (PVDF), Styrol-Butadien-Kautschuk (SBR), modifiziertem Styrol-Butadien-Copolymer (PSBR), Natriumcarboxymethylcellulose (CMC), Polyvinylacetat (PVA), Polyethylenglykol (PEG), Polybutylacrylat (PBA), Polyurethan (PU), Polyacrylnitril, Polypyrrol, Polyanilin, Perflurosulfonsäure und Poly(3,4-ethylendioxythiophen).

4. Wässrige Mangandioxidsekundärbatterie, Folgendes umfassend:
eine Kathode, die das Kathodenmaterial nach einem der vorhergehenden Ansprüche umfasst,
eine Zink-Anode,
einen Separator zum Trennen der Kathode von der Anode und
einen wässrigen Elektrolyten umfassend Zink- und Mangan-Ionen.

5. Wässrige Mangandioxidsekundärbatterie nach Anspruch 4, wobei der wässrige Elektrolyt Zink- und Mangan-Ionen in einem Bereich von 0,01 bis 5 Mol, vorzugsweise 0,1 bis 3 Mol, umfasst und einen pH-Wert von 1 bis 7, vorzugsweise von 4 bis 5, aufweist.

6. Verfahren zum Herstellen eines Kathodenmaterials für eine wässrige Mangandioxidsekundärbatterie, wobei das Verfahren Folgendes umfasst:
Bereitstellen von Mangandioxidpartikeln,
Bereitstellen einer Beschichtungslösung, umfassend eine organische Kohlenstoffquelle, ausgewählt aus einem oder mehreren von Monosacchariden, Disacchariden, Maltodextrin, Stärke und hydrierter Cellulose, wobei die Beschichtungslösung eine Konzentration an organischem Kohlenstoff von 0,5 bis 3 Gew.-% der Mangandioxidpartikel aufweist,
Beschichten der Mangandioxidpartikel mit der Beschichtungslösung,
Trocknen der kohlenstoffbeschichteten Mangandioxidpartikel und
Erhitzen der getrockneten kohlenstoffbeschichteten Mangandioxidpartikel.

7. Verfahren nach Anspruch 6, wobei das Trocknen der beschichteten Mangandioxidpartikel im Vakuum und/oder unter Rühren erfolgt.

8. Verfahren nach einem der Ansprüche 6 bis 7, wobei das Erhitzen der getrockneten kohlenstoffbeschichteten Mangandioxidpartikel bei einer Temperatur von bis zu 450 °C während eines Zeitraums von weniger als oder gleich 30 Minuten und mit einer Heizrate von 2-20 °C/min und gegebenenfalls in einer inerten Atmosphäre erfolgt.

## Revendications

1. Matériau de cathode pour une batterie secondaire aqueuse au dioxyde de manganèse, comprenant :
un mélange comprimé de particules de dioxyde de manganèse, **caractérisé en ce que**
les particules de dioxyde de manganèse sont modifiées de telle sorte que :
20 à 100 % d'une composition globale moyenne des particules de dioxyde de manganèse aient une structure de dioxyde de manganèse bêta, le reste étant constitué d'autres structures polymorphes de dioxyde de manganèse, de Mn₃O₄ ou de combinaisons de celles-ci,
la teneur en carbone des particules de dioxyde de manganèse, dans la masse et la surface des particules, soit de 0,005 à 0,01 % en poids, et dans lequel le mélange comprimé comprend en outre un additif conducteur d'électricité et un liant.

2. Matériau de cathode selon la revendication 1, dans lequel l'additif électriquement conducteur est l'un ou plusieurs parmi le carbone, le nickel, le cuivre, le cobalt, le titane et le fer.

3. Matériau de cathode selon la revendication 1 ou 2, dans lequel le liant est choisi parmi l'un quelconque ou plusieurs parmi le polyéthylène, le poly(acide acrylique), le polytétrafluoroéthylène (PTFE), le poly(fluorure de vinylidène) (PVDF), le caoutchouc styrène-butadiène (SBR), le copolymère styrène-butadiène modifié (PSBR), la carboxyméthylcellulose de sodium (CMC), le poly(acétate de vinyle) (PVA), le polyéthylène glycol (PEG), le poly(acrylate de butyle) (PBA), le polyuréthane (PU), le polyacrylonitrile, le polypyrrole, la polyaniline, l'acide perflurosulfonique et le poly(3,4-éthylènedioxythiophène).

4. Batterie secondaire aqueuse au dioxyde de manganèse, comprenant :
une cathode comprenant le matériau de cathode selon l'une quelconque des revendications précédentes,
une anode en zinc,
un séparateur pour séparer ladite cathode de ladite anode, et
un électrolyte aqueux comprenant des ions zinc et manganèse.

5. Batterie secondaire aqueuse au dioxyde de manganèse selon la revendication 4, dans laquelle l'électrolyte aqueux comprend des ions zinc et manganèse dans une plage de 0,01 à 5 molaires, de préférence de 0,1 à 3 molaires, et a un pH de 1 à 7, de préférence de 4 à 5.

6. Procédé de production d'un matériau de cathode pour une batterie secondaire aqueuse au dioxyde de manganèse, le procédé comprenant :
la fourniture de particules de dioxyde de manganèse,
la fourniture d'une solution d'enrobage comprenant une source de carbone organique sélectionnée parmi un ou plusieurs parmi des monosaccharides, des disaccharides, la maltodextrine, l'amidon et la cellulose hydrogénée, dans lequel la solution d'enrobage a une concentration en carbone organique de 0,5 à 3 % en poids des particules de dioxyde de manganèse,
l'enrobage des particules de dioxyde de manganèse avec la solution d'enrobage,
le séchage des particules de dioxyde de manganèse enrobées de carbone, et
le chauffage des particules de dioxyde de manganèse enrobées de carbone séchées.

7. Procédé selon la revendication 6, dans lequel le séchage des particules de dioxyde de manganèse enrobées a lieu sous vide et/ou sous agitation.

8. Procédé selon l'une quelconque des revendications 6 et 7, dans lequel le chauffage des particules de dioxyde de manganèse enrobées de carbone séchées a lieu à une température allant jusqu'à 450 °C pendant une période de temps inférieure ou égale à 30 minutes, et à une vitesse de montée en température de 2 à 20 °C/min, et éventuellement sous une atmosphère inerte.
